# EUROPEAN PATENT SPECIFICATION

(11) **EP 0 958 328 B1**
(45) Date of publication and mention of the grant of the patent: **17.10.2001**
(21) Application number: 97934791.1
(22) Date of filing: 31.07.1997
(51) Int. Cl.: C09K 11/02

(54) **SILICONE RUBBER-CONTAINING, AFTERGLOWING PREPARATION, PRODUCT PROVIDED THEREWITH AND USE THEREOF**
SILIKONKAUTSCHUK ENTHALTENDES, NACHLEUCHTENDES PRÄPARAT, PRODUKT MIT EINEM DERARTIGEN PRÄPARAT UND ANWENDUNG
PREPARATION LUMINESCENTE CONTENANT DU CAOUTCHOUC SILICONE, PRODUIT OBTENU AVEC CETTE PREPARATION ET SON UTILISATION

(30) Priority: 31.07.1996 NL 1003713
(43) Date of publication of application: 24.11.1999
(73) Proprietor: Beele Engineering B.V., 7122 NZ Aalten (NL)
(72) Inventor: BEELE, Johannes, Alfred, NL-7122 NZ Aalten (NL)
(74) Representative: Hooiveld, Arjen Jan Winfried
(86) International application number: NL9700452
(87) International publication number: WO9804645

(56) References cited:
- GB-A- 2 017 741
- GB-A- 2 085 465
- US-A- 3 661 790

## Description

The invention relates to a silicone rubber-containing, afterglowing preparation. The invention furthermore relates to a product provided with a silicone rubber-containing, afterglowing preparation and to the use of such a preparation.

From US Patent No. 5,506,474 an adhesive with a base of silicone rubber is known, which contains calcium carbonate as a filler and titanium dioxide as a light-reflecting agent. Said adhesive may furthermore contain marble dust, denatured alcohol and triethanol amine. According to a preferred embodiment said adhesive furthermore includes an agent which reflects UV radiation having a wavelength of less than 300 nm, such as antimonium trioxide. According to said US patent specification said adhesive is very suitable for connecting a tubular lamp to a lamp base being suitable for that purpose. An adhesive of this kind is not suitable for certain uses, however, because the adhesive will only reflect light upon being exposed to light. Furthermore said adhesive will reflect the light at practically the same wavelength, or practically the same wavelength range, as that of the light to which it is being exposed. This means that if the adhesive would be irradiated with visible "white" light (wavelength range approximately 400 - 800 nm) , only "white" light will be reflected. It will be apparent, therefore, that such an adhesive is not suitable for use as a signalling means which is capable of delivering a light signal in case of certain emergencies. Such an emergency may for example be an indoor fire accompanied by strong smoke production, whereby the electric power is cut off by the fire or has to be cut off for safety reasons. It will be apparent that so-called emergency lighting is not suitable for this kind of situations, either.

The object of the present invention is to provide a solution for the above-described problems. The invention therefore relates to a silicone rubber-containing, afterglowing preparation, which is characterized in that said silicone rubber is a curable silicone rubber and that the composition includes 0.1 - 10 per cent by weight of an afterglowing pigment comprising an alkaline earth metal-containing aluminate being doped with at least one transition metal.

The term afterglowing pigment used herein is understood to mean a fluorescent and/or a phosphorescent pigment. Fluorescence is the process wherein radiation is emitted as a result of a transition between two molecular energy levels comprising the same spinning condition (mostly singlet-singlet transition), whilst in the case of phosphorescence radiation is emitted as a result of a transition between two molecular energy levels comprising different spinning conditions (mostly triplet-singlet transition). Fluorescence is very brief and can generally be detected only when a fluorescent pigment is exposed to light. Phosphorescent pigments, however, are capable of emitting light for a much longer period of time after being exposed to light. Another advantage of both fluorescent and phosphorescent pigments is that they can emit light of a different wavelength or wavelength range than the light with which they are being irradiated or with which they were originally irradiated. Thus a pigment of this kind is capable of emitting light of a certain colour or shade upon or after being irradiated with for example "white" light.

British patent publication no. 2 085 465 discloses a silicone rubber-containing, afterglowing preparation with 15 - 30 per cent by weight of zinc sulphide or cadmium sulphide as an afterglowing pigment. However, in practice it has become apparent that these large percentages by weight of zinc sulphide or cadmium sulphide have a negative influence on the inherent properties of the silicone rubber such as flexibility, as well as resistency against temperatures particularly between -60° and 250 ° C, aging, ultraviolet light and ozone. A lowering of the amount of these kind of afterglowing pigments does not provide a solution without damaging the "afterglowing properties" as the afterglowing time, light intensity etc. A silicone rubber-containing, afterglowing preparation in accordance with the invention surprisingly has an excellent afterglow and afterglow intensity, while keeping the silicone rubber-properties intact, even at the claimed ranges.

The preparation according to the invention preferably includes 0.5 - 8% by weight, in particular 1- 4% by weight, of the afterglowing pigment.

The silicone rubber in the silicone rubber-containing, afterglowing preparation is preferably a silicone rubber which has a viscosity in the range of 100 - 1,000,000 cSt. at 25° C. Furthermore the silicone rubber is preferably a polydialkyl siloxane, which is capable of being cured at a temperature of about 5 - 130° C, preferably at a temperature of 20 - 120° C, and in particular at a temperature of 25 - 100° C. Said polysiloxane is in particular a polydimethyl siloxane.

When the silicone rubber is capable of being cured at about room temperature (this is about 25° C), curing may take place by means of water or a water-containing agent such as moisture (single-component silicone rubber), for example, or by means of an acetoxysilane, an alkoxysilane (two-component silicone rubber). When the silicone rubber is a two-component silicone rubber, curing may for example take place in the presence of a catalyst, such as dibutyl tin laureate, for example. When the silicone rubber is capable of being cured at temperatures of up to about 170° C, curing of the silicone rubber may take place by means of a peroxide-free vulcanisation system or by a peroxide compound, such as dibenzoyl peroxide, bis (2.4-dichlorobenzoyl) peroxide, t-butyperoxy-benzoate or dicumyl peroxide, for example.

According to the invention the silicone rubber is preferably cured by means of moisture or by means of a peroxide compound of a peroxide-free compound.

Advantageously the silicone rubber according to the invention is transparent after curing. The advantage of this is that less afterglowing pigment needs to be included in the silicone rubber-containing, afterglowing preparation in order to provide sufficient afterglow.

The preparation according to the invention may include one or more usual colorants and/or other (fluorescent and/or phosphorescent) pigments and/or plasticizers.

As described above, the afterglowing pigment may be a fluorescent and/or a phosphorescent pigment. According to the invention the afterglowing pigment is in any case a phosphorescent pigment, so that the pigment, after being exposed to light, is capable of emitting light in turn, which light may have a different wavelength or a different wavelength range than the light to which it was initially exposed. It will be apparent to those skilled in the art that the preparation according to the invention may also include more than one fluorescent an/or phosphorescent pigment.

The afterglowing pigment according to the invention contains an alkaline earth metal-containing aluminate, which is doped with one or more transition metals, said afterglowing pigment being in particular an alkaline earth metal-containing aluminate which is doped with one or more transition metals and which has a density of about 3.5 g/ml. The afterglowing pigment has an average particle size distribution of 1 - 100 *µ*, preferably 5 - 50 *µ*m, and in particular 10- 25 *µ*m. The afterglowing pigment may be irradiated with light having a wavelength range of about 350 - 450 nm, preferably about 380 - 400 nm. The afterglowing pigment preferably emits light having a maximum wavelength of about 520 nm and a wavelength range of 475 - 575 nm.

The afterglow and the afterglow intensity in accordance with DIN 67510, part 4 (1995) of the afterglowing pigment is at least 1350 minutes, preferably at least 2000 minutes, at a visibility limit of 0.3 mcd/m². The intensity of the light emitted by the afterglowing pigment is at least 170 mcd/m², preferably at least 400 mcd/m², after 5 minutes, at least 25 mcd/m², preferably at least 65 mcd/m², after 30 minutes, and at least 5 mcd/m², preferably at least 11 mcd/m², after 120 minutes.

The afterglowing preparation according to the invention preferably emits white to yellowish light.

The invention furthermore relates to a product with a silicone rubber-containing, afterglowing preparation. The preparation according to the invention may be provided in the same manner, for example by means of a tube containing the preparation and a so-called putty gun, as other agents used for sealing cracks, holes, fissures, seams and the like. The preparation according to the invention is excellently suited for use in for example buildings, in tunnels, on roads, in windows and the like, and it is preferably applied in places which are not trodden on or which are infrequently used. Places where the preparation according to the invention can be very suitably applied include those parts of steps which are not trodden on during normal use and door posts, for example. The preparation according to the invention may furthermore be applied in places where emergency lighting is present or must be present.

The afterglowing preparation according to the invention may be used in particular as a signalling means in case of certain emergency conditions, such as fires accompanied by strong smoke production, in particular in those cases where the electric power has to be cut off or is cut off by the fire as a result of which the emergency lighting that may be present no longer operates. At elevated temperatures, such as those that occur during a fire, the amount of light emitted by the afterglowing preparation is increased. Afterglowing preparation which has not been exposed to light first is capable of emitting light as a result of elevated temperatures that occur in case of fire, for example.

The afterglowing preparation may be prepared in the usual manner by means of the usual mixing apparatus.

### Example

A silicone rubber-containing, afterglowing preparation was prepared by mixing an amount of 4 g of an afterglowing pigment of type Lumilux Groen SN (Product No. 50061) marketed by the firm of Riedel-de Haen of Seelze, Germany, with 100 g of a silicone rubber of the polydimethyl siloxane type (Silglaze N from General Electric). Said mixing, preferably in a closed mixing apparatus, is continued until a homogeneous dispersion of the pigment in the silicone rubber is obtained.

## Claims

1. A silicone rubber-containing, afterglowing preparation, **characterized in that** said silicone rubber is a curable silicone rubber and that the composition includes 0.1 - 10 per cent by weight of an afterglowing pigment comprising an alkaline earth metal-containing aluminate being doped with at least one transition metal.

2. A silicone rubber-containing, afterglowing preparation according to claim 1, **characterized in that** the composition includes 0,5 - 8 per cent by weight, preferably 1 - 4 per cent by weight of the afterglowing pigment.

3. A silicone rubber-containing, afterglowing preparation according to claims 1 or 2, **characterized in that** said silicone rubber is capable of being cured at a temperature of 5 - 170° C.

4. A silicone rubber-containing, afterglowing preparation according to claims 1, 2 or 3, **characterized in that** said silicone rubber is a silicone rubber which can be cured by means of moisture or a peroxide compound.

5. A silicone rubber-containing, afterglowing preparation according to any one of the claims 1 - 4, **characterized in that** said silicone rubber is transparent after curing.

6. A silicone rubber-containing, afterglowing preparation according to any one of the claims 1-5, **characterized in that** said afterglowing pigment has an afterglow of at least 1350 minutes, preferably at least 2000 minutes, at a visibility limit of 0.3 mcd/m2.

7. A silicone rubber-containing, afterglowing preparation according to any one of the claims 1 - 6, **characterized in that** the intensity of the light emitted by said afterglowing pigment is at least 170 mcd/m2, preferably at least 400 mcd/m2, after 5 minutes.

8. A silicone rubber-containing, afterglowing preparation according to any one of the claims 1 - 7, **characterized in that** said afterglowing pigment emits white to yellowish light.

9. A silicone rubber-containing, afterglowing preparation according to any one of the claims 1 - 8, **characterized in that** said afterglowing preparation will emit light at elevated temperatures without first having been exposed to light.

10. A product provided with a silicone rubber-containing, afterglowing preparation according to claims 1 - 9.

11. Use of a silicone rubber-containing, afterglowing preparation according to claims 1 - 9 as a signalling means.

## Patentansprüche

1. Ein Silikonkautschuk enthaltendes, nachleuchtendes Präparat, **dadurch gekennzeichnet, daß** der Silikonkautschuk ein vulkanisierbarer Silikonkautschuk ist und die Zusammensetzung 0,1 - 10 Gew.% eines nachleuchtenden Pigments enthält, das ein Erdalkalimetall enthaltendes Aluminat umfaßt, das mit wenigstens einem Übergangsmetall dotiert ist.

2. Ein Silikonkautschuk enthaltendes, nachleuchtendes Präparat nach Anspruch 1, **dadurch gekennzeichnet, daß** die Zusammensetzung 0,5 - 8 Gew.%, vorzugsweise 1 - 4 Gew.% des nachleuchtendes Pigments enthält.

3. Ein Silikonkautschuk enthaltendes, nachleuchtendes Präparat nach Anspruch 1 oder 2, **dadurch gekennzeichnet, daß** der Silikonkautschuk bei einer Temperatur von 5 - 170 ° C vulkanisierbar ist.

4. Ein Silikonkautschuk enthaltendes, nachleuchtendes Präparat nach Anspruch 1, 2 oder 3, **dadurch gekennzeichnet, daß** der Silikonkautschuk ein Silikonkautschuk ist, der mittels Feuchtigkeit oder einer Peroxidverbindung vulkanisiert werden kann.

5. Ein Silikonkautschuk enthaltendes, nachleuchtendes Präparat nach irgendeinem der Ansprüche 1 - 4, **dadurch gekennzeichnet, daß** der Silikonkautschuk nach dem Vulkanisieren transparent ist.

6. Ein Silikonkautschuk enthaltendes, nachleuchtendes Präparat nach irgendeinem der Ansprüche 1 - 5, **dadurch gekennzeichnet, daß** das nachleuchtende Pigment ein Nachleuchten von wenigstens 1350 Minuten vorzugsweise wenigstens 2000 Minuten, bei einer Sichtbarkeitsgrenze von 0,3 mcd/m² aufweist.

7. Ein Silikonkautschuk enthaltendes, nachleuchtendes Präparat nach irgendeinem der Ansprüche 1 - 6, **dadurch gekennzeichnet, daß** die Intensität des von dem nachleuchtenden Pigment emittierten Lichts wenigstens 170 mcd/m², vorzugsweise wenigstens 400 mcd/m², nach fünf Minuten beträgt.

8. Ein Silikonkautschuk enthaltendes, nachleuchtendes Präparat nach irgendeinem der Ansprüche 1 - 7, **dadurch gekennzeichnet, daß** das nachleuchtende Pigment weißes bis gelbliches Licht emittiert.

9. Ein Silikonkautschuk enthaltendes, nachleuchtendes Präparat nach irgendeinem der Ansprüche 1 - 8, **dadurch gekennzeichnet, daß** das nachleuchtende Präparat Licht bei erhöhten Temperaturen emittieren wird, ohne zuerst Licht ausgesetzt worden zu sein.

10. Ein Produkt mit einem Silikonkautschuk enthaltenden, nachleuchtenden Präparat nach den Ansprüchen 1 - 9.

11. Anwendung eines Silikonkautschuk enthaltenden, nachleuchtenden Präparats gemäß den Ansprüchen 1 - 9 als ein Signalisierungsmittel.

## Revendications

1. Préparation luminescente contenant un caoutchouc au silicone, **caractérisée en ce que** ledit caoutchouc au silicone est un caoutchouc au silicone vulcanisable et que la composition comprend de 0,1 à 10 pour cent en poids d'un pigment luminescent comprenant un aluminate contenant un métal alcalino-terreux qui a été dopé avec au moins un métal de transition.

2. Préparation luminescente contenant un caoutchouc au silicone conformément à la revendication 1, **caractérisée en ce que** la composition comprend de 0,5 à 8 pour cent en poids, de préférence entre 1 et 4 pour cent en poids de pigment luminescent.

3. Préparation luminescente contenant un caoutchouc au silicone selon les revendications 1 ou 2, **caractérisée en ce que** le caoutchouc au silicone est susceptible d'être vulcanisé à une température comprise entre 5 et 170°C.

4. Préparation luminescente contenant un caoutchouc au silicone selon les revendications 1, 2 ou 3, **caractérisée en ce que** ledit caoutchouc au silicone est un caoutchouc au silicone qui peut être vulcanisé par une atmosphère humide ou par un composé de peroxyde.

5. Préparation luminescente contenant un caoutchouc au silicone selon l'une quelconque des revendications 1 à 4, **caractérisée en ce que** ledit caoutchouc au silicone est transparent après vulcanisation.

6. Préparation luminescente contenant un caoutchouc au silicone selon l'une quelconque des revendications 1 à 5, **caractérisée en ce que** ledit pigment luminescent présente une luminescence d'au moins 1350 minutes, de préférence d'au moins 2000 minutes, avec une limite de visibilité de 0,3 mcd/m².

7. Préparation luminescente contenant un caoutchouc au silicone selon l'une quelconque des revendications 1 à 6, **caractérisée en ce que** l'intensité de la lumière émise par le pigment luminescent est d'au moins 170 mcd/m², de préférence d'au moins 400 mcd/m², après 5 minutes.

8. Préparation luminescente contenant un caoutchouc au silicone selon l'une quelconque des revendications 1 à 7, **caractérisée en ce que** ledit pigment luminescent émet une lumière blanche à jaunâtre.

9. Préparation luminescente contenant un caoutchouc au silicone selon l'une quelconque des revendications 1 à 8, **caractérisée en ce que** ladite préparation luminescente émettra de la lumière à des températures élevées sans avoir été préalablement exposée à la lumière.

10. Produit comportant une préparation luminescente contenant un caoutchouc au silicone selon l'une quelconque des revendications 1 à 9.

11. Utilisation d'une préparation luminescente contenant un caoutchouc au silicone selon l'une quelconque des revendications 1 à 9 en tant que moyen de signalisation.
